# EUROPÄISCHE PATENTSCHRIFT

(11) **EP 3 911 497 B1**
(45) Veröffentlichungstag und Bekanntmachung des Hinweises auf die Patenterteilung: **07.06.2023**
(21) Anmeldenummer: 20701950.6
(22) Anmeldetag: 20.01.2020
(51) Int. Cl.: B29C 71/02, B29C 71/00, B29C 64/35

(54) **VORRICHTUNG UND VERFAHREN ZUR OBERFLÄCHENGLÄTTUNG VON ADDITIV HERGESTELLTEN FORMTEILEN AUS KUNSTSTOFF**
DEVICE AND METHOD FOR SURFACE SMOOTHING ADDITIVELY MANUFACTURED SHAPED PARTS CONSISTING OF PLASTIC
DISPOSITIF ET PROCÉDÉ POUR LE LISSAGE EN SURFACE DE PIÈCES MOULÉES EN PLASTIQUE PRÉPARÉES DE MANIÈRE ADDITIVE

(30) Priorität: 18.01.2019 DE 102019101351
(43) Veröffentlichungstag der Anmeldung: 24.11.2021
(73) Patentinhaber: DyeMansion GmbH, 82152 Planegg (DE)
(72) Erfinder: KRAMER, Philipp, 80339 München (DE); EWALD, Felix, 81375 München (DE)
(74) Vertreter: 2s-ip Schramm Schneider Bertagnoll Patent- und Rechtsanwälte Part mbB
(86) Internationale Anmeldenummer: PCT/EP2020/051282
(87) Internationale Veröffentlichungsnummer: WO 2020/148457

(56) Entgegenhaltungen:
- AT-B- 305 512
- DE-A1-102016 115 676
- DE-A1-102017 200 191
- US-A- 3 475 229
- US-A- 3 851 426

## Beschreibung

### Gebiet der Erfindung

Die Erfindung betrifft ein Verfahren zur Oberflächenglättung eines additiv hergestellten Formteils aus Kunststoff, sowie eine Vorrichtung, mit der das erfindungsgemäße Verfahren durchgeführt werden kann.

### Hintergrund der Erfindung

Es ist bekannt, Kunststoffgegenstände bzw. Formteile aus Kunststoff in einem generativen bzw. additiven Fertigungsverfahren herzustellen, wobei die Gegenstände schichtweise aufgebaut werden. Die generativen bzw. additiven Fertigungsverfahren werden nachfolgend allgemein als 3D-Druckverfahren bzw. Druckverfahren bezeichnet. Als Ausgangsmaterial für die in einem 3D-Druckverfahren herzustellenden Gegenstände bzw. Formteile können sämtliche hierfür geeigneten Kunststoffe, etwa Polyamide oder sonstige Thermoplaste verwendet werden.

Die Herstellung derartiger Formteile in einem 3D-Druckverfahren hat den Nachteil, dass die Oberfläche der Formteile rau bzw. porös ist und oftmals industriellen Anforderungen an die Oberflächengüte nicht genügt. Die Formteile können daher einem erhöhten Verschleiß unterliegen. Andererseits kann aufgrund der porösen Oberflächenstruktur Schmutz verhältnismäßig leicht an der Oberfläche haften bleiben. Die Ästhetik und Haptik des Formteils kann so erheblich beeinträchtigt werden.

Um die raue bzw. poröse Oberflächenstruktur von solchen Formteilen zumindest teilweise zu beseitigen, ist es aus dem Stand der Technik bekannt, die Oberfläche der Formteile zu schleifen und/oder zu polieren. Damit kann die Oberfläche der Formteile zwar glatter ausgestaltet werden. Allerdings ist ein weitgehendes Beseitigen der Poren nur mit erheblichem Aufwand möglich. Der erzielte Glanzgrad der Oberfläche bei mechanischen Oberflächenbearbeitungsverfahren ist oftmals nicht ausreichend.

Ein Polieren bzw. Schleifen der Oberfläche des Formteils ist allerdings nicht in jedem Fall möglich, denn hierbei kann es zu einem erheblichen Materialabtrag kommen. Der Materialabtrag kann die Geometrie des Formteils erheblich verändern, was in vielen Fällen nicht erwünscht ist.

Zusätzlich stoßen mechanische Oberflächenbearbeitungsverfahren bei flexiblen Materialien wie TPU oder TPE an ihre Grenzen und haben nahezu keinen Effekt auf die Oberflächenrauheit.

Alternativ ist es aus dem Stand der Technik bekannt, die Oberfläche des Formteils mit Säure oder Lösemittel zu bedampfen, um eine Glättung der Oberfläche zu erreichen. Hierbei wird die Oberfläche des Formteils angelöst, wodurch die Poren weitestgehend verschlossen werden und die Oberfläche geglättet wird. Die Verwendung von derartigen Mitteln zur Oberflächenbehandlung ist allerdings nicht immer wünschenswert, insbesondere dann, wenn die Formteile bei Gebrauch am Körper getragen bzw. in Kontakt mit der Haut kommen, was etwa bei einer im 3D-Druckverfahren hergestellten Brillenfassung der Fall ist. Beim Bedampfen der Oberfläche mit Säure oder Lösemittel kann zudem nicht ausgeschlossen werden, dass beim Verschließen der Poren in diesen - wenn auch nur in sehr geringen Mengen - die Oberflächenbehandlungsmittel eingeschlossen werden, die im ungünstigen Fall bei Gebrauch des Formteils wieder austreten können.

Ferner kann die chemische Reaktion oft nur durch Erzeugen eines Vakuums in dem Behandlungsraum und ein Entfernen des Lösemittels / der Säure aus dem Behandlungsraum gestoppt werden. Hierbei entstehen häufig Blasen an der Oberfläche des Formteils, insbesondere in den Ecken und exponierten Oberflächenabschnitten.

Zudem ist ein Glätten der Oberfläche von Formteilen, die aus Säure- bzw. Lösemittel beständigen Materialien bestehen, nicht möglich - die Oberfläche solcher Formteile kann nur mit mechanischen Verfahren geglättet werden, allerdings mit den vorstehend genannten Einschränkungen.

Aus der DE 10 2016 115 676 A1 ist ein Verfahren zur Reduzierung der Oberflächenrauigkeit eines additiv gefertigten Metallbauteils bekannt, bei dem das Bauteil in einer Kammer platziert wird, die Kammer mit einem brennbaren Gasgemisch gefüllt wird und das Gasgemisch entzündet wird, sodass ein Wärmeimpuls auf die Oberfläche des Bauteils einwirkt.

Aus der AT 305 512 B ist ein Verfahren bekannt, mit dem dünnwandige Ausladungen, etwa Grate, an dickwandigen Fertigungsgegenständen beseitigt werden können, wobei die durchschnittliche Temperatur des zu behandelnden Gegenstandes praktisch unverändert bleibt. Der Gegenstand ist in einer gasgefüllten Kammer angeordnet und wird während weniger als 1 Sekunde erhöhten Gastemperaturen ausgesetzt. Die erhöhten Gastemperaturen innerhalb der Kammer können durch Zünden eines zündfähigen Gemisches erzeugt werden.

Aus der US 3,851,426 A ist einer Verfahren zum Beseitigen einer Oberflächenrauigkeit eines Artikel bekannt, bei dem der Artikel in einer Reaktionskammer angeordnet wird und die Oberfläche des Artikels mittels Stoßwellen bearbeitet wird, wobei die Stoßwellen durch Zünden eines Gases in der Reaktionskammer erzeugt werden.

### Aufgabe der Erfindung

Aufgabe der vorliegenden Erfindung ist es daher, Lösungen für ein Glätten von Oberflächen von additiv hergestellten Kunststoffformteilen bereit zu stellen, mit denen eine homogenere Oberflächenglättung erzielt werden kann.

### Erfindungsgemäße Lösung

Diese Aufgabe wird erfindungsgemäß durch ein Verfahren zur Oberflächenglättung eines additiv hergestellten Formteils aus Kunststoff, sowie durch eine Vorrichtung zur Oberflächenglättung von additiv hergestellten Formteilen aus Kunststoff nach den unabhängigen Ansprüchen gelöst. Vorteilhafte Ausgestaltungen und Weiterbildungen der Erfindung ergeben sich aus den jeweiligen abhängigen Ansprüchen.

Bereitgestellt wird demnach ein Verfahren zur Oberflächenglättung eines additiv hergestellten Formteils aus Kunststoff, wobei das Verfahren einen Explosionsschritt umfasst, mit dem die Oberfläche des Formteils in einer Prozesskammer durch Zünden eines in die Prozesskammer eingebrachten, brennbaren Prozessgases geglättet wird, wobei die Oberfläche des Formteils zumindest abschnittsweise von dem gezündeten Prozessgas angelöst wird. Das Verfahren zeichnet sich erfindungsgemäß dadurch aus, dass es einen Aufwärmschritt umfasst, mit dem das Formteil auf eine vorbestimmte Temperatur, die niedriger als die Schmelztemperatur des Kunststoffes des Formteils ist, erhitzt wird, wobei der Aufwärmschritt vor dem Explosionsschritt ausgeführt wird.

Dadurch wird auf besonders einfache Weise und insbesondere ohne Zuhilfenahme säurehaltiger Mittel oder sonstiger Lösungsmittel und ohne Zuhilfenahme materialabtragender Einrichtungen bzw. Verfahren die Oberfläche des Formteils geglättet. Durch das Zünden des Prozessgases wird die Oberfläche des Formteils kurzzeitig angelöst bzw. angeschmolzen, wodurch an der Oberfläche vorhandene Porengeschlossen werden ohne dass sich die Geometrie des Formteils wesentlich verändert. Zudem werden durch Zünden des Prozessgases an der Oberfläche haftende Pulverpartikel verbrannt. Der Explosionsschritt des erfindungsgemäßen Verfahrens dauert lediglich wenige Millisekunden bis hin zu Bruchteilen einer Millisekunde, wodurch der gewünschte Glättungseffekt erzielt wird, ohne dass sich dabei die Geometrie des Formteils verändert. Im Zusammenhang mit der vorliegenden Erfindung ist unter "Anlösen der Oberfläche" immer ein "Anschmelzen der Oberfläche" zu verstehen.

Es hat sich gezeigt, dass durch eine Oberflächenglättung des Formteils unter Verwendung lediglich des Explosionsschrittes gegebenenfalls an exponierten Stellen des Formteils (etwa an Kanten oder Überständen) ein wesentlich besserer Glättungseffekt erzielt wird, als auf flächigen Oberflächenbereichen des Formteils. Die Folge kann ein inhomogenes Erscheinungsbild der Oberfläche mit sehr glatten Bereichen an den exponierten Stellen und weniger glatten Bereichen an den anderen Stellen sein.

Überraschenderweise kann durch Erhitzen des Formteils auf eine vorbestimmte Temperatur gemäß dem Aufwärmschritt des erfindungsgemäßen Verfahrens eine deutlich homogenere Oberflächenglättung erzielt werden, d.h., dass sowohl an den exponierten Stellen des Formteils als auch an den flächigen Oberflächenabschnitten derselbe Glättungseffekt hoher Güte erreicht wird. Es ist daher besonders vorteilhaft, vor dem Explosionsschritt den Aufwärmschritt durchzuführen.

Durch das Erhitzen des Formteils auf eine vorbestimmte Temperatur, bevor das Prozessgas gezündet wird, wird der durch das gezündete Prozessgas bewirkte Glättungseffekt in vorteilhafter Weise insbesondere an flachen Oberflächenabschnitten des Formteils unterstützt. Es hat sich nämlich gezeigt, dass der Temperatureintrag nach dem Zünden des Prozessgases in die Oberfläche des Formteils dazu führt, dass Oberflächen der exponierten Abschnitte des Formteils deutlich besser erhitzt werden (d.h. höhere Temperaturen erreichen) bzw. deutlich schneller erhitzt werden als die Oberflächen der anderen (flächigen) Abschnitte.

Durch das Erhitzen des Formteils auf eine vorbestimmte Temperatur gemäß dem Aufwärmschritt wird in vorteilhafter Weise erreicht, dass sich diese im Explosionsschritt beim Temperatureintrag ergebenden Unterschiede nicht negativ auf die Qualität der Oberflächenglättung auswirken. Das Formteil kann so beim Zünden des Prozessgases auch an den flachen Oberflächenabschnitten höhere Temperaturen erreichen bzw. schneller aufgewärmt werden. Damit wird sowohl an den exponierten Bereichen des Formteils als auch an den anderen Bereichen derselbe qualitativ hochwertige Glättungseffekt erzielt.

Die durch das Zünden des Prozessgases entstehende Explosion kann nur wenige Millisekunden bis hin zu Bruchteilen einer Millisekunde dauern, sodass es vorkommen kann, dass die für das Oberflächenglätten benötigte Temperatur nicht oder nur für zu kurze Zeit erreicht wird. Ein Vorteil des erfindungsgemäßen Verfahrens liegt nun auch darin, dass durch das Erhitzen der Formteile in dem Aufwärmschritt das Erreichen der für die Oberflächenglättung benötigte Temperatur in dem Explosionsschritt erheblich beschleunigt wird, sodass die durch die Explosion des Prozessgases entstehende Wärmeenergie größtenteils zum Glätten der Oberfläche zur Verfügung steht und nicht für das Erreichen der benötigten Temperatur aufgewandt werden muss.

Überraschenderweise hat sich gezeigt, dass sich durch Erwärmen der Formteile in dem ersten Schritt auch bei flächigen Abschnitten des Formteils eine hochwertige Glättung erzielen lässt, und dass dieses Erwärmen gleichzeitig keine negativen Auswirkungen auf die Qualität der Glättung in den exponierten Oberflächenbereichen hat.

Vorteilhaft ist es, wenn in dem Aufwärmschritt zumindest die Oberfläche des Formteils erhitzt wird.

Vorteilhaft kann es sein, wenn die vorbestimmte Temperatur zwischen 50°C und 400°C, vorzugsweise zwischen 100°C und 300°C beträgt. In jedem Fall liegt die vorbestimmte Temperatur aber unterhalb der Schmelztemperatur des Kunststoffes des Formteils.

In einer Ausgestaltung der Erfindung kann es vorteilhaft sein, wenn der Explosionsschritt mehrfach durchgeführt wird. Die einzelnen Explosionsschritte werden hierbei vorzugsweise zeitlich beabstandet durchgeführt. Dadurch wird ein noch besserer Glättungseffekt erreicht, da eine durch einen Explosionsschritt geglättete Oberfläche durch einen weiteren Explosionsschritt noch weiter geglättet werden kann.

In einer Ausgestaltung der Erfindung kann es vorteilhaft sein, wenn der Aufwärmschritt und der Explosionsschritt mehrfach durchgeführt werden. Vorteilhaft kann es hierbei sein, wenn der Aufwärmschritt und der Explosionsschritt abwechselnd durchgeführt werden. Die einzelnen Schritte werden hierbei vorzugsweise zeitlich beabstandet durchgeführt.

In dem Explosionsschritt kann durch Zünden des Prozessgases eine Explosion des Prozessgases in der Prozesskammer hervorgerufen werden, wobei die durch die Explosion des Prozessgases hervorgerufene Temperatur von vorzugsweise mindestens 1.500°C, besonders bevorzugt zwischen 2.000°C und 3.500°C, über einen Zeitraum von 0,1 ms bis zu 100 ms gehalten wird.

Vorteilhaft kann es sein, wenn das Prozessgas bis zu einem Druck von 0,1 bar bis 25 bar, bevorzugt von 0,3 bar bis 2 bar, in die Prozesskammer eingebracht wird.

Damit bei der Explosion des Prozessgases genügend thermische Energie freigesetzt wird, müsste der Fülldruck in der Prozesskammer bei deutlich über 25 bar liegen. Dies hätte den Nachteil, dass Formteile, die beispielsweise Hohlräume mit sehr dünnen Wandungen aufweisen, aufgrund der Druckdifferenzen zwischen den Hohlräumen und dem Fülldruck beschädigt werden könnten. Es hat sich allerdings gezeigt, dass aufgrund der Erhitzung der Formteile in dem Aufwärmschritt der Fülldruck auf unter 25 bar, in den meisten Fällen sogar auf unter 1 bar reduziert werden kann, wobei bei der Explosion des Prozessgases dennoch ausreichend Wärmeenergie für das Oberflächenglätten freigesetzt wird. Durch diese deutliche Reduzierung des Fülldrucks wird zudem gewährleistet, dass die Formteile nicht beschädigt werden.

Das Prozessgas kann ein Gemisch aus Sauerstoff und einem Brenngas, insbesondere Wasserstoff, Erdgas und/oder Methan, sein.

Vorteilhaft kann es sein, wenn vor dem Einbringen des Prozessgases in die Prozesskammer die in der Prozesskammer vorhandene Luft zumindest teilweise oder alternativ komplett entfernt wird.

Durch das zumindest teilweise oder komplette Entfernen der in der Prozesskammer vorhandenen Luft wird erreicht, dass der Fülldruck in der Prozesskammer noch weiter reduziert werden kann. Durch das Entfernen der Luft aus der Prozesskammer wird der Prozesskammer auch Stickstoff entzogen, der bei der Explosion des Prozessgases vergleichsweise viel Wärmeenergie aufnimmt, sodass insbesondere bei niedrigen Fülldrücken die verbleibende Wärmeenergie nicht ausreichen würde, um zuverlässig die gewünschte Oberflächenglättung zu erreichen. Je weniger Stickstoff in der Prozesskammer verbleibt, umso geringer kann der Druck, mit dem das Prozessgas in die Prozesskammer eingebracht wird, sein. Dabei ist dennoch gewährleistet, dass die gewünschte Oberflächenglättung zuverlässig erreicht wird. Zudem ist eine bessere Dosierung des in die Prozesskammer eingebrachten Prozessgases möglich.

In einer Ausgestaltung der Erfindung kann der Aufwärmschritt in der Prozesskammer durchgeführt werden.

Der Druck in der Prozesskammer kann unmittelbar nach der Explosion des Prozessgases auf den Umgebungsdruck gebracht werden.

Damit kann der Druck in der Prozesskammer schlagartig auf den außerhalb der Prozesskammer herrschenden Druck gebracht werden, wodurch die Temperatur im Inneren der Prozesskammer schlagartig bis unterhalb der Schmelztemperatur des Kunststoffes des Formteils, vorzugsweise auf die Umgebungstemperatur (Temperatur außerhalb der Prozesskammer) reduziert werden kann. Das durch das Zünden des Prozessgases bewirkte Anlösen bzw. Anschmelzen der Oberfläche des Formteils wird dadurch unterbrochen bzw. beendet, bevor es zu einer Geometrieänderung des Formteils kommen kann. Zudem wird das Formteil so direkt nach der Explosion des Formteils abgekühlt.

In einer Ausgestaltung der Erfindung kann auch eine Kühleinrichtung vorgesehen sein, mit der das Innere der Prozesskammer abgekühlt werden kann (entweder nachdem der Überdruck abgelassen wurde oder bevor der Überdruck abgelassen wird). Das Abkühlen des Formteils kann so unterstützt werden.

In einer Ausgestaltung der Erfindung kann das Formteil vor dem Explosionsschritt bzw. vor dem Aufwärmschritt gefärbt werden. Es hat sich gezeigt, dass das Glätten der Oberfläche nach dem Färben ein homogeneres Bild der Oberfläche erzeugt.

In einer weiteren Ausgestaltung der Erfindung kann das Formteil nach dem Explosionsschritt gefärbt werden. Durch das Glätten in dem Explosionsschritt werden durch den 3D-Druck bedingte unterschiedliche Oberflächeneigenschaften ausgeglichen, wodurch eine besonders homogene Färbung ermöglicht wird. Versuche haben gezeigt, dass nach einer mechanischen Oberflächenglättung, etwa durch Schleifen, keine solche homogene Färbung möglich ist wie nach dem Glätten in dem Explosionsschritt.

Vorteilhaft ist es, wenn zum Färben der Formteile ein Farbstoff ausgewählt aus der Gruppe umfassend Metallkomplexfarbstoffe, Säurefarbstoffe, Reaktivfarbstoffe, Azofarbstoffe, Dispersionsfarbstoffe, und Mischungen hiervon, verwendet wird.

Zum Färben kann ein Färbegemisch hergestellt werden, wobei der Farbstoff in einem Lösungsmittel aufgelöst wird, wobei dem Lösungsmittel bezogen auf einem Liter zwischen 0,05 g und 50 g, vorzugsweise zwischen 0,05 g und 25 g, besonders bevorzugt zwischen 0,1 g und 10 g des Farbstoffes zugegeben werden.

In einer Ausgestaltung der Erfindung kann dem Färbegemisch ein amphoteres Netzmittel, zugegeben werden. In dem Färbegemisch kann das amphotere Netzmittel färbehemmend wirken und die Farbaufnahme durch das Formteil verzögern. Beispielsweise hat sich herausgestellt, dass sich bei roten und blauen Farbstoffen bzw. Farbtönen an der Oberfläche des Formteils Flecken bilden können. Durch die Zugabe eines amphoteren Netzmittels zu dem Färbegemisch kann eine solche Fleckenbildung erheblich reduziert oder vermieden werden, sodass ein insgesamt homogeneres Farbbild des eingefärbten Formteils gewährleistet werden kann.

In einer noch weiteren Ausgestaltung der Erfindung kann das Formteil vor dem Explosionsschritt bzw. vor dem Aufwärmschritt und/oder nach dem Explosionsschritt mechanisch und/oder chemisch geglättet werden. Das mechanische Glätten kann hierbei schleifen, strahlen, polieren und Kombinationen hiervon umfassen. Das chemische Glätten kann hierbei ein Glätten mit einem Lösungsmittel oder mit einer Säure umfassen.

Durch ein vorheriges Schleifen der Oberfläche kann diese verbessert oder hinsichtlich der Geometrie angepasst werden.

Beim Strahlen der Oberfläche des Formteils (sowohl vor dem Explosionsschritt bzw. vor dem Aufwärmschritt als auch nach dem Explosionsschritt) hat sich als besonders vorteilhaft herausgestellt hierfür kugelförmige Strahlmittel zu verwenden.

Mit dem Strahlen vor dem Explosionsschritt bzw. vor dem Aufwärmschritt mit den kugelförmigen Strahlmitteln kann ein erstes Glätten der Oberfläche des Formteils erreicht werden. Zudem wird dadurch die Oberfläche verdichtet. Mit dem nachfolgenden Explosionsschritt wird die (gegebenenfalls verdichtete) Oberfläche dann noch weiter geglättet.

Mit dem Strahlen nach dem Explosionsschritt mit den kugelförmigen Strahlmitteln kann die Oberfläche des Formteils verdichtet werden.

Zudem kann die Oberfläche des Formteils dadurch mattiert werden. Es hat sich gezeigt, dass ein Mattieren der Oberfläche auch mit andersförmigen Strahlmitteln bewirkt werden kann, etwa mit zylinderförmigen oder quaderförmigen Strahlmitteln, aber auch mit Bruch, etwa Glasbruch.

Besonders vorteilhaft ist es, wenn für das Strahlen Strahlmittel aus Kunststoff verwendet werden, da der Härtegrad von Strahlmitteln aus Kunststoff deutlich geringer ist als der Härtegrad von beispielsweise Edelkorund, Keramikkugeln oder Glasperlen. Dadurch wird effektiv verhindert, dass beim Verdichten bzw. Glätten der Oberfläche diese aufgeraut oder gar beschädigt wird. Zudem können mineralische Strahlmittel stauben und somit die Oberfläche kontaminieren. Auch Metallabrieb von metallischen Strahlmitteln kann die Oberfläche verunreinigen.

Besonders vorteilhaft sind jedoch kugelförmige Strahlmittel aus Kunststoff (Kunststoffkugeln), mit denen ein optimales Verdichten der Oberfläche des Formteils erreicht werden kann.

Das mechanische und/oder chemische Glätten und das Färben vor dem Explosionsschritt bzw. vor dem Aufwärmschritt und/oder nach dem Explosionsschritt können auch kombiniert werden. Das heißt,
- vor dem Explosionsschritt bzw. vor dem Aufwärmschritt kann das Formteil mechanisch und/oder chemisch geglättet und/oder gefärbt werden, bzw.
- nach dem Explosionsschritt kann das Formteil mechanisch und/oder chemisch geglättet und/oder gefärbt werden.

Das additive Herstellungsverfahren zur Herstellung des Formteils kann umfassen:
- Stereolithografie,
- Pulverbettverfahren, etwa Laser-Sintern (z.B. Selektives Lasersintern),
- Laser-Strahlschmelzen (z.B. Laser Powder Bed Fusion), sofern zum Herstellen von Formteilen aus Kunststoff geeignet,
- Elektronen-Strahl schmelzen, sofern zum Herstellen von Formteilen aus Kunststoff geeignet,
- Fused Layer Manufacturing,
- Multi-Jet Modelling bzw. Multi-Jet Fusion, und
- Poly-Jet Modelling.
- Fused Filament Fabrication

Besonders vorteilhaft anwendbar ist das erfindungsgemäße Verfahren für Formteile, die mit folgenden Materialien oder Kombinationen hiervon gedruckt wurden:
- Polyamid 6 (PA6),
- Polyamid 12 (PA12),
- Polyamid 11 (PA11),
- Thermoplastische Elastomere (TPE),
- Thermoplastisches Polyurethan (TPU),
- Polymethylmethacrylat (PMMA),
- Polypropylen (PP),
- Polyetheretherketon (PEEK), und
- Poly(etherketonketon) (PEKK).

Durch das erfindungsgemäße Glätten der Oberfläche der in einem 3D-Druckverfahren hergestellten Formteile werden in besonders vorteilhafter Weise die durch den 3D-Druck bedingten unterschiedlichen Oberflächeneigenschaften ausgeglichen, wodurch eine homogenere Nachbearbeitung des Formteils, etwa eine homogenere Färbung, ermöglicht wird.

Ein weiterer besonderer Vorteil des erfindungsgemäßen Verfahrens liegt darin, dass die Formteile nach dem erfindungsgemäßen Glätten druckdicht gegen jegliche Medien sind. Aufgrund der sehr hohen Güte der mit dem erfindungsgemäßen Verfahren erzielbaren Oberflächenglätte können die Formteile im medizinischen Bereich (etwa als Orthesen/Prothesen oder als chirurgisches Besteck) und auch in der Lebensmittelindustrie (z.B. Verpackungen) eingesetzt werden.

Bereit gestellt wird ferner eine Vorrichtung zur Oberflächenglättung von additiv hergestellten Formteilen aus Kunststoff, mit einer druckdicht verschließbaren Prozesskammer, in welche die zu glättenden Formteile einbringbar sind, wobei
- die Prozesskammer mit einer Prozessgasquelle verbindbar ist zum Einbringen eines Prozessgases in die Prozesskammer, und
- die Prozesskammer mit einer Zündeinrichtung versehen ist zum Zünden eines in die Prozesskammer eingebrachten Prozessgases.

Die erfindungsgemäße Vorrichtung zeichnet sich dadurch aus, dass der Prozesskammer eine Heizeinrichtung zugeordnet ist, mit der die in die Prozesskammer eingebrachten Formteile vor dem Zünden des Prozessgases auf eine vorbestimmte Temperatur, die niedriger als die Schmelztemperatur des Kunststoffes des Formteils ist, erhitzbar sind.

Zudem kann der Prozesskammer eine Kühleinrichtung zugeordnet sein, mit der die Formteile nach dem Zünden des Prozessgases abgekühlt werden können.

Die Heizeinrichtung kann im Inneren oder zumindest teilweise im Inneren der Prozesskammer angeordnet sein.

Vorteilhaft ist es, wenn die Prozesskammer mit einer Entlüftungseinrichtung verbindbar ist, mit der in der Prozesskammer vorhandene Luft vor dem Einbringen des Prozessgases zumindest teilweise entfernbar ist.

Die Entlüftungseinrichtung kann eine Vakuumpumpe sein.

Die Prozesskammer kann ein Entlüftungsventil, insbesondere ein Schnellentlüftungsventil aufweisen, über das nach einer Explosion des in die Prozesskammer eingebrachten Prozessgases, die durch das Zünden des Prozessgases hervorgerufen wird, ein Überdruck in der Prozesskammer entweichen kann.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: eine (schematische) vergrößerte Darstellung eines Ausschnittes einer Oberfläche eines additiv hergestellten Formteils aus Kunststoff, das nach dem erfindungsgemäßen Verfahren geglättet wird;
- Fig. 2: eine erfindungsgemäße Vorrichtung zur Oberflächenglättung; und
- Fig. 3: drei verschiedene Varianten des erfindungsgemäßen Verfahrens.

### Detaillierte Beschreibung der Erfindung

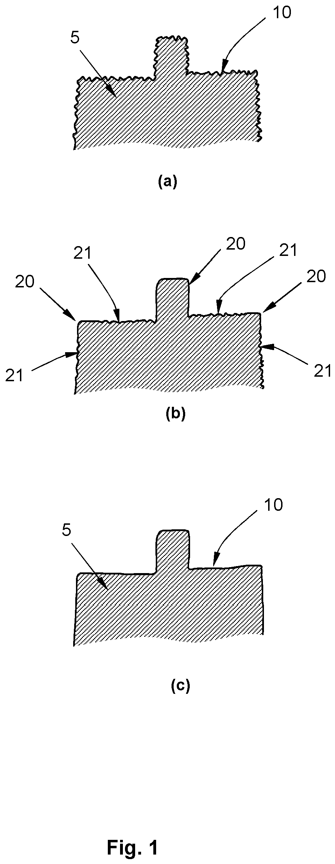

**Fig. 1** zeigt in Abbildung (a) einen vergrößerten Ausschnitt einer Oberfläche 10 eines in einem 3D-Druckverfahren hergestellten Formteils 5, in Abbildung (b) das in Abbildung (a) gezeigte Formteil, bei dem die Oberflächenglättung durch die Explosion des Prozessgases (Explosionsschritt) erfolgte, und in Abbildung (c) das Formteil aus Abbildung (a), bei dem die Oberflächenglättung durch Aufwärmen (Aufwärmschritt) und durch die anschließende Explosion des Prozessgases (Explosionsschritt) erfolgte.

Ein in einem 3D-Druckverfahren hergestelltes Formteil 5 aus Kunststoff weist eine raue bzw. poröse Oberfläche 10 auf (wie in Abbildung (a) gezeigt), die sich negativ auf die Haptik des Formteils auswirken kann. Zudem kann an der rauen Oberfläche 10 relativ einfach Schmutz haften bleiben, sodass auch aus hygienischen Gründen in vielen Fällen eine glatte Oberfläche wünschenswert ist. Ein nachträgliches Färben des Formteils kann zudem nur unter Inkaufnahme von Mängeln an der Färbequalität durchgeführt werden, beispielsweise kann keine homogene Färbung erreicht werden.

Aufgrund technischer Gegebenheiten bekannter 3D-Druckverfahren bzw. hierfür verwendeter 3D-Drucker lassen sich solche Kunststoffformteile allerdings nicht mit der gewünschten Oberflächenglätte herstellen, sodass ein Nachbearbeiten der Oberfläche notwendig wird.

In Abbildung (b) ist das Formteil 5 gezeigt, bei dem durch Zünden eines Prozessgases (Explosionsschritt) eine Oberflächenglättung durchgeführt wurde.

Zur Oberflächenglättung wird das Formteil 5 in eine Prozesskammer eingebracht, in der auch das zu zündende Prozessgas eingebracht wird. Durch das Zünden des Prozessgases wird in der Prozesskammer eine Explosion hervorgerufen, mit der in der Prozesskammer eine Temperatur von zwischen 1.500°C und 3.500°C erreicht wird, die über einen Zeitraum von bis zu 100°ms gehalten wird. Wie aus Abbildung (b) ersichtlich ist, wird die gesamte Oberfläche im Vergleich zu der Oberfläche 10 aus Abbildung (a) geglättet.

Je nach verwendetem Material bzw. verwendetem 3D-Druckverfahren kann es vorkommen, dass der gewünschte Glättungseffekt nur an den Oberflächen der exponierten Stellen 20 erzielt wird. Die flächigen Oberflächenbereiche 21 der Oberfläche10 werden zwar auch geglättet, der Glättungseffekt in diesen Bereichen 21 entspricht aber nicht dem gewünschten Glättungseffekt (wie er an den exponierten Stellen 20 erzielt wird). Das Ergebnis ist eine im Vergleich zu der in Abbildung (a) gezeigten Oberfläche glattere Oberfläche, die je nach verwendetem Material bzw. verwendetem 3D-Druckverfahren ein inhomogenes Erscheinungsbild aufweist.

Die an den exponierten Stellen 20 deutlich bessere Oberflächenglättung im Vergleich zur Oberflächenglättung in den Bereichen 21 resultiert daraus, dass an den exponierten Stellen 20 die Oberfläche im Verhältnis zum Volumen hoch oder sogar sehr hoch ist, sodass die durch die Explosion des Prozessgases in die exponierten Stellen eingebrachte Wärmeenergie nur sehr schlecht in das Innere des Formteils 5 abgeleitet werden kann. An den exponierten Stellen 20 steht daher die eingebrachte Wärmeenergie fast ausschließlich für das Anlösen und Verschmelzen der Oberfläche zur Verfügung.

In den flächigen Oberflächenbereichen 21 hingegen ist die Oberfläche im Verhältnis zum Volumen relativ gering, sodass die dort eingebrachte Wärmeenergie relativ gut in das Innere des Formteils 5 abgeleitet werden kann. Lediglich ein kleiner Teil der in die Bereiche 21 eingebrachten Wärmeenergie steht daher für das Anlösen und Verschmelzen der Oberfläche 21 zur Verfügung, sodass an den Bereichen 21 der gewünschte Glättungseffekt unter Umständen nicht erreicht wird.

In Abbildung (c) ist das in Abbildung (a) gezeigte Formteil gezeigt, dessen Oberfläche durch Aufwärmen (Aufwärmschritt) und durch die anschließende Explosion des Prozessgases (Explosionsschritt) geglättet wurde. Zusätzlich zu dem Explosionsprozess, der durch das Zünden des in die Prozesskammer eingebrachten Prozessgases verursacht wird, kann es vorteilhaft sein, das Formteil 5 vor dem Explosionsprozess (Explosionsschritt) auf eine vorbestimmte Temperatur, die niedriger als die Schmelztemperatur des Kunststoffes des Formteils 5 ist, zu erhitzen (Aufwärmschritt). Je nach verwendetem Material des Formteils 5 kann diese Temperatur zwischen 50°C und 400°C liegen. Bei den meisten Materialien, die für die additive Fertigung von Formteilen verwendet werden, liegt diese Temperatur üblicherweise bei zwischen 100°C und 300°C. In jedem Fall liegt diese Temperatur aber unterhalb der Schmelztemperatur des Kunststoffes des Formteils.

Durch das Erhitzen des Formteils, bevor es dem Explosionsprozess ausgesetzt wird, wird erreicht, dass die in die flächigen Oberflächenbereiche 21 eingebrachte Wärmeenergie des Explosionsprozesses ausreicht, um beim Explosionsprozess die gewünschte Oberflächenglättung zu erreichen. Obwohl auch nach dem Erwärmen die in die Oberflächenbereiche 21 eingebrachte Wärmeenergie des Explosionsprozesses gut in das Innere des Formteils 5 abgeleitet wird, reicht der Wärmeeintrag dennoch aus, um die gewünschte Oberflächenglättung zu erzielen. Durch das Erwärmen des Formteils wird nämlich das Ableiten der eingebrachten Wärmeenergie in das Innere des Formteils 5 reduziert, sodass effektiv mehr Wärmeenergie an der Oberfläche 21 für das Anlösen bzw. Anschmelzen und Verschmelzen des Oberflächenbereiches 21 zur Verfügung steht.

Je nach verwendetem Material bzw. verwendetem 3D-Druckverfahren kann die gesamte Oberfläche 10 des Formteils 5 die gewünschte Oberflächenglättung und somit ein homogenes Erscheinungsbild aufweisen, wie aus Abbildung (c) deutlich ersichtlich ist.

Nach dem Glätten der Oberfläche gemäß dem erfindungsgemäßen Verfahren kann das Formteil gefärbt werden. Aufgrund der durch das erfindungsgemäße Oberflächenglätten erzielten hohen Güte und hohen Homogenität der Glätte der Oberfläche wird ein besonders homogenes Erscheinungsbild der gefärbten Oberfläche erreicht. Das Färben kann alternativ auch vor dem Glätten durchgeführt werden.

Vor oder nach dem erfindungsgemäßen Glätten der Oberfläche kann die Oberfläche mechanisch behandelt werden, etwa geschliffen, gestrahlt oder poliert werden.

Ein Strahlen der Oberfläche erfolgt vorzugsweise mit kugelförmigen Stahlmittel, insbesondere aus Kunststoff (Kunststoffkugeln). Die Kunststoffkugeln werden vorzugsweise so gewählt, dass sie einen Härtegrad aufweisen, der in etwa dem Härtegrad des Kunststoffes des Formteils entspricht. Ein leicht höherer Härtegrad der Kunststoffkugeln ist möglich. Durch das Strahlen der Oberfläche mit den Kunststoffkugeln kann ein erstes Glätten der Oberfläche erreicht werden. Zudem wird die Oberfläche verdichtet. Ein Strahlen nach dem Glätten kann zudem zum Erzeugen einer glatten aber matteren Oberfläche durchgeführt werden.

Das Formteil kann vor oder nach dem Strahlen gefärbt werden.

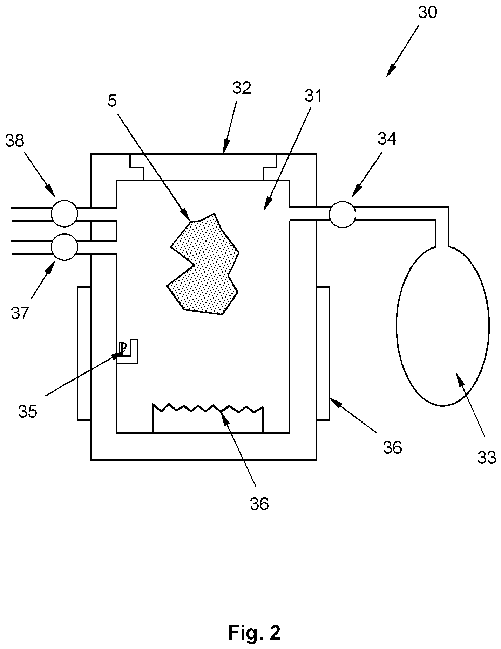

**Fig. 2** zeigt eine erfindungsgemäße Vorrichtung 30 zur Oberflächenglättung von additiv hergestellten Formteilen 5 aus Kunststoff. Mit Hilfe der nachfolgend beschriebenen Vorrichtung werden auch Schritte des erfindungsgemäßen Verfahrens (nochmals) näher erläutert.

Die Vorrichtung 30 umfasst eine Prozesskammer 31, die mittels einer Klappe, Tür oder Deckel 32 druckdicht verschließbar ist. Durch den Deckel 32 werden die zu glättenden Formteile 5 in die Prozesskammer 31 eingebracht. Hier handelt es sich um aus Kunststoff additive hergestellte Formteile, deren Oberflächen geglättet werden sollen. Die Prozesskammer 31 ist ebenfalls druckdicht ausgestaltet und kann etwa als zylinderförmiges Gehäuse ausgestaltet sein. In die Prozesskammer 31 können bei Bedarf auch mehrere zu glättende Formteile eingebracht werden.

Die Prozesskammer 31 ist mit einem brennbaren Prozessgas beaufschlagbar, das zum Glätten der Oberfläche des Formteils 5 gezündet wird. Die durch das Zünden des Prozessgases hervorgerufene Explosion führt aufgrund der Wärmeentwicklung zu einem Glätten der Oberfläche des Formteils, wobei über einen Zeitraum von zwischen 0,1 ms und 100 ms Temperaturen von zwischen 1.500°C und 3.500°C erreicht werden. Durch diese Wärmeentwicklung wird die Oberfläche des Formteils angelöst bzw. angeschmolzen und verschmolzen ohne dass sich hierbei die Geometrie des Formteils wesentlich verändert. Vorhanden Poren werden effektiv verschlossen. Gleichzeitig wird die Oberfläche des Formteils druckdicht gegen jegliche Medien ausgestaltet.

Zur Beaufschlagung der Prozesskammer 31 mit dem Prozessgas ist diese über eine Zuführeinrichtung 34, die eine Zuleitung und eine Pumpe aufweisen kann, mit einer Prozessgasquelle 33 verbindbar. Zum Zünden des der Prozesskammer 31 zugeführten Prozessgases ist eine Zündeinrichtung 35 vorgesehen, die innerhalb der Prozesskammer 31 angeordnet ist bzw. in diese hineinragt. Bei der Zündeinrichtung 35 kann es sich um eine elektrische Zündeinrichtung handeln. Die Zündeinrichtung ist nach dem Schießen des Deckels 32 aktivierbar. Vorzugsweise ist die Zündeinrichtung 35 so in der Prozesskammer 31 angeordnet, dass sie bei Bedarf leicht gereinigt werden kann. Die Zündeinrichtung 35 kann mehrere Zündvorrichtungen (etwa mehrere elektrische Zündvorrichtungen) umfassen.

Das Prozessgas kann aus einer Mischung von Sauerstoff und einem Brenngas bestehen. Als Brenngase können etwa Wasserstoff, Erdgas oder Methangas verwendet werden, wobei auch andere geeignete Brenngase verwendet werden können.

Die Prozessgasquelle 33 kann das Prozessgas, also das Gemisch aus Sauerstoff und Brenngas aufnehmen, sodass letztlich nur ein Behältnis für die Bevorratung des Prozessgases zur Verfügung gestellt werden muss.

Alternativ kann die Prozessgasquelle 33 mehre Behältnisse (z.B. Gasflaschen) umfassen, von denen jede ein bestimmtes Brenngas bzw. den Sauerstoff aufnimmt. In diesem Fall kann die Prozessgasquelle 33 bzw. die mehreren Behältnisse der Prozessgasquelle über eine Mischeinrichtung mit der Prozesskammer 31 verbunden werden. Die Mischeinrichtung kann so ausgestaltet sein, dass die Prozessgaskomponenten, also der Sauerstoff und das verwendete Brenngas nacheinander der Prozesskammer zugeführt werden. Alternativ kann die Mischeinrichtung auch so ausgestaltet sein, dass diese aus dem Sauerstoff und dem verwendeten Brenngas das Prozessgas mischen kann und diese Mischung der Prozesskammer 31 zuführt.

Vorteilhaft ist es, wenn das Brenngas im Überschuss vorliegt. Das Brenngas kann dann als Schutzgas fungieren, das den vorhandenen Sauerstoff an sich reißt und so verhindert, dass der Sauerstoff zu Verbrennungen am Formteil 5 führen kann.

Mittels einer Druckmesseinrichtung wird der Innendruck der Prozesskammer 31 überwacht. Nach Erreichen eines bestimmten Fülldruckes wird die Prozessgaszufuhr gestoppt und die Zuführöffnung druckdicht geschlossen. Der Fülldruck liegt bei etwa zwischen 0,1 bar und 25 bar, vorzugsweise bei etwa zwischen 0,3 bar und 2 bar.

Um eine zuverlässige Dosierung des Prozessgases zu ermöglichen, wird die nach dem Schließen des Deckels 32 in der Prozesskammer 31 noch vorhandene Luft vor dem Einfüllen des Prozessgases zumindest teilweise, vorzugsweise jedoch weitestgehend aus der Prozesskammer 31 entfernt. Gemäß Fig. 2 wird die Luft aus der Prozesskammer 31 mittels einer Entlüftungseinrichtung 37 abgesaugt. Die Entlüftungseinrichtung 37 kann eine Vakuumpumpe umfassen, mittels welcher die Prozesskammer 31 bis auf einen Druck von etwa 0,05 bar (bei Bedarf auch geringer) evakuiert werden kann. Dadurch wird erreicht, dass das Mischungsverhältnis des in die Prozesskammer 31 eingebrachten Prozessgases weitestgehend dem Mischungsverhältnis entspricht, mit dem das Prozessgas in die Prozesskammer 31 eingebracht wurde.

Dem Prozessraum 31 kann zudem ein Entlüftungsventil 38 zugeordnet sein, das vorzugsweise als Schnellentlüftungsventil ausgestaltet ist. Über dieses Schnellentlüftungsventil 38 kann der in der Prozesskammer 31 befindliche Überdruck entweder nach dem erfolgten Oberflächenglättungsvorgang oder bei einem Störfall abgelassen werden.

Das Schnellentlüftungsventil 38 wird so lange geschlossen gehalten, bis der Oberflächenglättungsvorgang nach erfolgter Zündung des Prozessgases abgeschlossen ist. In an sich bekannter Weise kann das Schließen des Schnellentlüftungsventils 38 mittels Federwirkung erfolgen, während das Öffnen des Schnellentlüftungsventils 38 durch Hydraulikkraft entgegen der Federwirkung erfolgen kann. Der Hydraulikdruck des Schnellentlüftungsventils 38 ist den Reaktionskräften in der Prozesskammer 31 angepasst.

Direkt nach Beendigung der Explosion (die zwischen 0,1 ms und 100 ms dauert) oder nach einer kurzen Abklingphase öffnet der Hydraulikzylinder das Schnellentlüftungsventil 38 und lässt den Überdruck abströmen. Nach dem Druckabbau kann die Prozesskammer 31 geöffnet werden.

Das Ablassen des Überdruckes unmittelbar nach der Explosion des Prozessgases führt auch dazu, dass sich die Temperatur im Inneren der Prozesskammer schlagartig bis unterhalb der Schmelztemperatur des Kunststoffes des Formteils reduziert. Dadurch kann verhindert werden, dass die Formteile nach der Explosion weiter mit einer solchen Temperatur beaufschlagt werden, die gegebenenfalls zu einer ungewollten Veränderung der Geometrie der Formteile führt. Es kann also vorteilhaft sein, den Überdruck in der Prozesskammer 31 unmittelbar nach der Explosion des Prozessgases abzulassen, d.h. den Druck in der Prozesskammer auf Umgebungsdruck zu bringen.

Um die gewünschte Oberflächenglätte auch bei Materialien zu erzielen, bei denen der Explosionsschritt alleine zum Glätten nicht ausreicht, ist es bei der erfindungsgemäßen Vorrichtung 30 vorgesehen, die Prozesskammer 31 vor dem Zünden des eingebrachten Prozessgases zu erhitzen.

Für das Aufheizen der Prozesskammer 31 ist dieser eine Heizeinrichtung 36 zugeordnet. Die Heizeinrichtung 36 kann beispielsweise eine Heizmanschette umfassen, die an der Wandung der Prozesskammer 31 angeordnet oder in die Wandung der Prozesskammer 31 integriert ist. Alternativ kann die Heizeinrichtung 36 eine Heizspule oder einen Heizdraht umfassen, der in der Prozesskammer angeordnet ist. Gemäß einer weiteren Alternative, kann die Prozesskammer mittels einer InfrarotHeizeinrichtung erhitzt werden. In einer noch weiteren Alternative kann das Aufheizen der Prozesskammer 31 auch mittels eines Brenners vorgenommen werden, indem der Innenraum der Prozesskammer 31 mit Flammen beaufschlagt wird.

Die Prozesskammer 31 bzw. der Innenraum der Prozesskammer 31 wird nach dem Einbringen des Formteils 5 und nach dem Verschließen der Klappe 32 mit Hilfe der Heizeinrichtung erhitzt und zwar auf eine Temperatur, die unterhalb der Schmelztemperatur des Kunststoffes des Formteils 5 liegt. Zur Überwachung der Temperatur ist ein entsprechender Sensor vorgesehen. Der Innenraum des Prozesskammer 31 wird auf etwa zwischen 50°C und 400°C, bevorzugt auf etwa zwischen 100°C und 300°C erhitzt.

Sofern ein Entlüften der Prozesskammer 31 notwendig oder gewünscht ist (mit Hilfe der Entlüftungseinrichtung 37) ist es vorteilhaft dies vor dem Aufheizen der Prozesskammer 31 durchzuführen.

Nach dem Aufheizen des Innenraumes der Prozesskammer 31 wird dem Prozessraum das Prozessgas zugeführt und nach Erreichen des benötigten Fülldruckes wird das Prozessgas gezündet. Durch das Zünden des Prozessgases wird eine Explosion hervorgerufen, bei der für einen Zeitraum von zwischen 0,1 ms und 100 ms die Temperatur in der Prozesskammer 31 auf etwa zwischen 1.500°C und 3.500°C ansteigt.

Die Explosionsdauer, die dabei erreichbaren Temperaturen und Explosionsdrücke können durch Änderung des Mischungsverhältnisses des Prozessgases, durch Änderung des Fülldruckes und durch das vorherige Entlüften der Prozesskammer eingestellt werden. Dadurch können diese Parameter auf den jeweiligen verwendeten Kunststoff des Formteils 5 optimal angepasst werden.

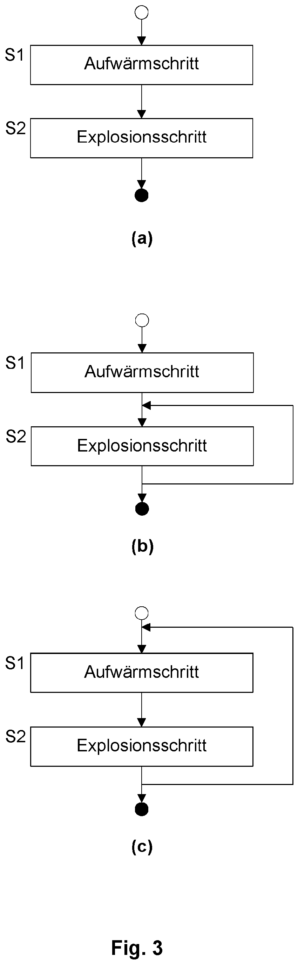

**Fig. 3** zeigt in den Abbildungen (a), (b) und (c) drei verschiedene Varianten des erfindungsgemäßen Verfahrens.

Gemäß der in Abbildung (a) gezeigten Variante umfasst das erfindungsgemäße Verfahren einen Aufwärmschritt S1 und einen Explosionsschritt S2, wobei der Aufwärmschritt S1 zeitlich vor dem Explosionsschritt S2 durchgeführt wird.

Gemäß der in Abbildung (b) gezeigten alternativen Variante umfasst das erfindungsgemäße Verfahren ebenfalls einen Aufwärmschritt S1 und einen Explosionsschritt S2. Der Aufwärmschritt S1 wird zeitlich vor dem Explosionsschritt S2 durchgeführt. Der Explosionsschritt S2 wird gemäß dieser Variante mehrfach durchgeführt. Die einzelnen Explosionsschritte werden hierbei vorzugsweise zeitlich beabstandet durchgeführt. Zwischen zwei aufeinanderfolgenden Explosionsschritten kann die Prozesskammer 31 evakuiert werden und neues Prozessgas kann der Prozesskammer 31 zugeführt werden. Hierbei kann es vorteilhaft sein, das neue Prozessgas erst dann der Prozesskammer 31 zuzuführen bzw. den weiteren Explosionsschritt erst dann durchzuführen, nachdem sich das Formteil auf eine vorbestimmte Temperatur abgekühlt hat.

Gemäß der in Abbildung (c) gezeigten alternativen Variante umfasst das erfindungsgemäße Verfahren ebenfalls einen Aufwärmschritt S1 und einen Explosionsschritt S2, wobei Aufwärmschritt S1 und der Explosionsschritt S2 mehrfach durchgeführt werden. In einer vorteilhaften Ausgestaltung werden der Aufwärmschritt S1 und der Explosionsschritt S2 abwechselnd durchgeführt. Nach einem Explosionsschritten kann die Prozesskammer 31 evakuiert werden, bevor der nächste Aufwärmschritt S1 durchgeführt wird. Nach dem weiteren Aufwärmschritt S1 kann neues Prozessgas der Prozesskammer 31 zugeführt werden.

### Bezugszeichen:

- 5: Formteil
- 10: Oberfläche des Formteils 5
- 20: exponierte Stellen bzw. Oberflächenabschnitte des Formteils 5
- 21: flächige Oberflächenabschnitte des Formteils 5
- 30: Vorrichtung zur Oberflächenglättung
- 31: Prozesskammer der Vorrichtung 30
- 32: Deckel / Klappe zum Verschließen der Prozesskammer 31
- 33: Prozessgasquelle
- 34: Zuführeinrichtung (z.B. Pumpe) zum Einbringen des Prozessgases in die Prozesskammer 31
- 35: Zündeinrichtung zum Zünden des Prozessgases
- 36: Heizeinrichtung (kann auch als Heiz-/Kühleinrichtung ausgestaltet sein)
- 37: Entlüftungseinrichtung, z.B. Vakuumpumpe
- 38: Entlüftungsventil
- S1: Aufwärmschritt
- S2: Explosionsschritt

## Patentansprüche

1. Verfahren zur Oberflächenglättung eines additiv hergestellten Formteils (5) aus Kunststoff, wobei das Verfahren umfasst:
- einen Explosionsschritt (S2), mit dem die Oberfläche (10) des Formteils (5) in einer Prozesskammer (31) durch Zünden eines in die Prozesskammer (31) eingebrachten, brennbaren Prozessgases geglättet wird, wobei die Oberfläche (10) des Formteils (5) zumindest abschnittsweise von dem gezündeten Prozessgas angelöst wird,
**dadurch gekennzeichnet, dass**
- das Verfahren einen Aufwärmschritt (S1)
umfasst, mit dem das Formteil (5) auf eine vorbestimmte Temperatur, die niedriger als die Schmelztemperatur des Kunststoffes des Formteils (5) ist, erhitzt wird,
wobei der Aufwärmschritt (S1) vor dem Explosionsschritt (S2) ausgeführt wird

2. Verfahren nach Anspruch 1, wobei in dem Aufwärmschritt (S1) zumindest die Oberfläche (10) des Formteils (5) erhitzt wird.

3. Verfahren nach einem der Ansprüche 1 oder 2, wobei die vorbestimmte Temperatur zwischen 50°C und 400°C, vorzugsweise zwischen 100°C und 300°C ist.

4. Verfahren nach einem der vorhergehenden Ansprüche, wobei der Explosionsschritt (S2) mehrfach durchgeführt wird.

5. Verfahren nach einem der Ansprüche 1 bis 3, wobei der Aufwärmschritt (S1) und der Explosionsschritt (S2) mehrfach durchgeführt werden, wobei der Aufwärmschritt (S1) und der Explosionsschritt (S2) vorzugsweise abwechselnd durchgeführt werden.

6. Verfahren nach einem der vorhergehenden Ansprüche, wobei in dem Explosionsschritt (S2) durch Zünden des Prozessgases eine Explosion des Prozessgases in der Prozesskammer (31) hervorgerufen wird, wobei die durch die Explosion des Prozessgases hervorgerufene Temperatur von vorzugsweise mindestens 1.500°C, besonders bevorzugt zwischen 2.000°C und 3.500°C, über einen Zeitraum von 0,1 ms bis zu 100 ms gehalten wird.

7. Verfahren nach einem der vorhergehenden Ansprüche, wobei das Prozessgas bis zu einem Druck von 0,1 bar bis 25 bar, bevorzugt von 0,3 bar bis 2 bar, in die Prozesskammer (31) eingebracht wird.

8. Verfahren nach einem der vorhergehenden Ansprüche, wobei das Prozessgas ein Gemisch aus Sauerstoff und einem Brenngas, insbesondere Wasserstoff, Erdgas und/oder Methan, ist.

9. Verfahren nach einem der vorhergehenden Ansprüche, wobei vor dem Einbringen des Prozessgases in die Prozesskammer (31) die in der Prozesskammer (31) vorhandene Luft zumindest teilweise entfernt wird.

10. Verfahren nach einem der vorhergehenden Ansprüche, wobei der Aufwärmschritt (S1) in der Prozesskammer (31) durchgeführt wird.

11. Verfahren nach einem der vorhergehenden Ansprüche, wobei der Druck in der Prozesskammer (31) unmittelbar nach der Explosion des Prozessgases auf den Umgebungsdruck gebracht wird.

12. Vorrichtung (30) zur Oberflächenglättung von additiv hergestellten Formteilen aus Kunststoff, mit einer druckdicht verschließbaren Prozesskammer (31), in welche die zu glättenden Formteile (5) einbringbar sind, wobei
- die Prozesskammer (31) mit einer Prozessgasquelle (33) verbindbar ist zum Einbringen eines Prozessgases in die Prozesskammer (31), und
- die Prozesskammer (31) mit einer Zündeinrichtung versehen ist zum Zünden eines in die Prozesskammer (31) eingebrachten Prozessgases,
**dadurch gekennzeichnet, dass**
- der Prozesskammer (31) eine Heizeinrichtung (36) zugeordnet ist, mit der die in die Prozesskammer (31) eingebrachten Formteile (5) vor dem Zünden des Prozessgases auf eine vorbestimmte Temperatur, die niedriger als die Schmelztemperatur des Kunststoffes des Formteils (5) ist, erhitzbar sind.

13. Vorrichtung nach dem vorhergehenden Anspruch, wobei die Heizeinrichtung (36) im Inneren oder zumindest teilweise im Inneren der Prozesskammer (31) angeordnet ist.

14. Vorrichtung nach einem der vorhergehenden Ansprüche 12 bis 13, wobei die Prozesskammer (31) mit einer Entlüftungseinrichtung (37) verbindbar ist, mit der in der Prozesskammer (31) vorhandene Luft vor dem Einbringen des Prozessgases zumindest teilweise entfernbar ist, wobei die Entlüftungseinrichtung (37) vorzugsweise eine Vakuumpumpe ist.

15. Vorrichtung nach einem der Ansprüche 12 bis 14, wobei die Prozesskamme (31) ein Entlüftungsventil (38), insbesondere ein Schnellentlüftungsventil aufweist, über das nach einer Explosion des in die Prozesskammer (31) eingebrachten Prozessgases, die durch das Zünden des Prozessgases hervorgerufen wird, ein Überdruck in der Prozesskammer (31) entweichen kann.

## Claims

1. Method for smoothing the surface of an additively produced molded part (5) made of plastics material, the method comprising:
- an explosion step (S2) with which the surface (10) of the molded part (5) is smoothed in a process chamber (31) by igniting a combustible process gas introduced into the process chamber (31), wherein the surface (10) of the molded part (5) is at least partially etched by the ignited process gas, **characterized in that**
- the method comprises a heating step (S1) with which the molded part (5) is heated to a predetermined temperature which is lower than the melting temperature of the plastics material of the molded part (5), wherein the heating step (S1) is carried out prior to the explosion step (S2).

2. Method according to claim 1, wherein at least the surface (10) of the molded part (5) is heated in the heating step (S1).

3. Method according to any of claims 1 or 2, wherein the predetermined temperature is between 50°C and 400°C, preferably between 100°C and 300°C.

4. Method according to any of the preceding claims, wherein the explosion step (S2) is carried out multiple times.

5. Method according to any of claims 1 to 3, wherein the heating step (S1) and the explosion step (S2) are carried out multiple times, wherein the heating step (S1) and the explosion step (S2) are preferably carried out alternately.

6. Method according to any of the preceding claims, wherein, in the explosion step (S2), an explosion of the process gas in the process chamber (31) is caused by igniting the process gas, wherein the temperature resulting from the explosion of the process gas of preferably at least 1,500°C, particularly preferably between 2,000°C and 3,500°C, is maintained over a period of 0.1 ms to 100 ms.

7. Method according to any of the preceding claims, wherein the process gas is introduced into the process chamber (31) up to a pressure of from 0.1 bar to 25 bar, preferably from 0.3 bar to 2 bar.

8. Method according to any of the preceding claims, wherein the process gas is a mixture of oxygen and a combustion gas, in particular hydrogen, natural gas, and/or methane.

9. Method according to any of the preceding claims, wherein the air present in the process chamber (31) is at least partially removed before the process gas is introduced into the process chamber (31).

10. Method according to any of the preceding claims, wherein the heating step (S1) is carried out in the process chamber (31).

11. Method according to any of the preceding claims, wherein the pressure in the process chamber (31) is brought to the ambient pressure immediately after the explosion of the process gas.

12. Apparatus (30) for smoothing the surface of additively produced molded parts made of plastics material, comprising a process chamber (31) that can be closed in a pressure-tight manner, into which the molded parts (5) to be smoothed can be introduced, wherein
- the process chamber (31) can be connected to a process gas source (33) for introducing a process gas into the process chamber (31), and
- the process chamber (31) is provided with an ignition device for igniting a process gas introduced into the process chamber (31),
**characterized in that**
- a heating device (36) with which the molded parts (5) introduced into the process chamber (31) can be heated to a predetermined temperature, which is lower than the melting temperature of the plastics material of the molded part (5), before the process gas is ignited, is assigned to the process chamber (31).

13. Apparatus according to the preceding claim, wherein the heating device (36) is arranged inside or at least partially inside the process chamber (31).

14. Apparatus according to any of the preceding claims 12 to 13, wherein the process chamber (31) can be connected to a venting device (37) with which the air present in the process chamber (31) can be at least partially removed before the process gas is introduced, wherein the venting device (37) is preferably a vacuum pump.

15. Apparatus according to any of claims 12 to 14, wherein the process chamber (31) has a venting valve (38), in particular a quick venting valve, by means of which an overpressure in the process chamber (31) can escape after an explosion of the process gas that is introduced into the process chamber (31), said explosion being caused by igniting said process gas.

## Revendications

1. Procédé de lissage en surface d'une pièce moulée (5) en matière plastique fabriquée de manière additive, dans lequel le procédé comprend :
- une étape d'explosion (S2) selon laquelle la surface (10) de la pièce moulée (5) est lissée dans une chambre de processus (31) par allumage d'un gaz de processus inflammable introduit dans la chambre de processus (31), dans lequel la surface (10) de la pièce moulée (5) est attaquée au moins par sections par le gaz de processus allumé, **caractérisé en ce que**
- le procédé comprend une étape de chauffage (S1) selon laquelle la pièce moulée (5) est chauffée à une température prédéfinie, laquelle est inférieure à la température de fusion de la matière plastique de la pièce moulée (5), dans lequel l'étape de chauffage (S1) est mise en oeuvre avant l'étape d'explosion (S2).

2. Procédé selon la revendication 1, dans lequel, dans l'étape de chauffage (S1), au moins la surface de la pièce moulée est chauffée.

3. Procédé selon l'une des revendications 1 ou 2, dans lequel la température prédéfinie est comprise entre 50 et 400 °C, de préférence entre 100 et 300 °C.

4. Procédé selon l'une quelconque des revendications précédentes, dans lequel l'étape d'explosion (S2) est mise en oeuvre plusieurs fois.

5. Procédé selon l'une quelconque des revendications 1 à 3, dans lequel l'étape de chauffage (S1) et l'étape d'explosion (S2) sont mises en oeuvre plusieurs fois, dans lequel l'étape de chauffage (S1) et l'étape d'explosion (S2) sont, de préférence mises en oeuvre en alternance.

6. Procédé selon l'une quelconque des revendications précédentes, dans lequel, dans l'étape d'explosion (S2), une explosion du gaz de processus dans la chambre de processus (31) est provoquée par allumage du gaz de processus, dans lequel la température provoquée par l'explosion du gaz de processus est, de préférence d'au moins 1 500 °C, de manière particulièrement préférée entre 2 000 °C et 3 500 °C, pendant une durée de 0,1 à 100 ms.

7. Procédé selon l'une quelconque des revendications précédentes, dans lequel le gaz de processus est introduit dans la chambre de processus (31) jusqu'à une pression de 0,1 à 25 bars, de préférence de 0,3 à 2 bars.

8. Procédé selon l'une quelconque des revendications précédentes, dans lequel le gaz de processus est un mélange d'oxygène et d'un gaz combustible, en particulier d'hydrogène, de gaz naturel et/ou de méthane.

9. Procédé selon l'une quelconque des revendications précédentes, dans lequel l'air présent dans la chambre de processus (31) est éliminé au moins partiellement avant l'introduction du gaz de processus dans la chambre de processus (31).

10. Procédé selon l'une quelconque des revendications précédentes, dans lequel l'étape de chauffage (S1) est mise en oeuvre dans la chambre de processus (31).

11. Procédé selon l'une quelconque des revendications précédentes, dans lequel la pression dans la chambre de processus (31) est ramenée à la pression ambiante immédiatement après l'explosion du gaz de processus.

12. Dispositif (30) destiné au lissage en surface des pièces moulées en matière plastique fabriquées de manière additive, comprenant une chambre de processus (31) pouvant être fermée de manière étanche à la pression, dans laquelle les pièces moulées (5) à lisser peuvent être introduites, dans lequel
- la chambre de processus (31) peut être reliée à une source de gaz de processus (33) pour introduire un gaz de processus dans la chambre de processus (31), et
- la chambre de processus (31) est pourvue d'un dispositif d'allumage destiné à l'allumage d'un gaz de processus introduit dans la chambre de processus (31),
**caractérisé en ce qu'**un
- dispositif de chauffage (36) est associé à la chambre de processus (31), au moyen duquel les pièces moulées (5) introduites dans la chambre de processus (31) peuvent être chauffées à une température prédéfinie, laquelle est inférieure à la température de fusion de la matière plastique de la pièce moulée (5), avant l'allumage du gaz de processus.

13. Dispositif selon la revendication précédente, dans lequel le dispositif de chauffage (36) est disposé à l'intérieur ou au moins partiellement à l'intérieur de la chambre de processus (31).

14. Dispositif selon l'une quelconque des revendications précédentes 12 à 13, dans lequel la chambre de processus (31) peut être reliée à un dispositif d'aération (37) permettant d'éliminer au moins partiellement l'air présent dans la chambre de processus (31) avant l'introduction du gaz de processus, dans lequel le dispositif d'aération (37) est, de préférence une pompe à vide.

15. Dispositif selon l'une quelconque des revendications 12 à 14, dans lequel la chambre de processus (31) comporte une soupape d'aération (38), en particulier une soupape d'aération rapide, au moyen de laquelle, après une explosion du gaz de processus introduit dans la chambre de processus (31), par allumage du gaz de processus, une surpression dans la chambre de processus (31) peut se dissiper.
